(19) Europäisches Patentamt
European Patent Office
Office européen des brevets

(11) EP 1 038 907 A2

(12) EUROPEAN PATENT APPLICATION

(43) Date of publication:
**27.09.2000 Bulletin 2000/39**

(51) Int. Cl.[7]: **C08J 7/04**, C09D 183/04
// C08L69:00

(21) Application number: **00105945.0**

(22) Date of filing: **23.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **23.03.1999 JP 7750999**

(71) Applicant:
**MITSUBISHI GAS CHEMICAL COMPANY, INC.**
**Chiyoda-ku, Tokyo 100-8324 (JP)**

(72) Inventors:
- **Hirota, Toshizumi,**
  **Mitsubishi Gas Chem. Com. Inc.**
  **Hiratsuka-shi, Kanagawa-ken 254-0016 (JP)**
- **Kanzaki, Fumiaki,**
  **Mitsubishi Gas Chem. Com. Inc.**
  **Hiratsuka-shi, Kanagawa-ken 254-0016 (JP)**

(74) Representative: **HOFFMANN - EITLE**
**Patent- und Rechtsanwälte**
**Arabellastrasse 4**
**81925 München (DE)**

# (54) Polycarbonate resin laminate

(57) A polycarbonate resin laminate according to a one coat method with no primer layer, having a cured layer formed of an organopolysiloxane coating obtainable from a blend comprising (a) a mixture of bifunctional alkoxysilane, trifunctional alkoxysilane and tetrafunctional alkoxysilane or a mixture of said trifunctional alkoxysilane and said tetrafunctional alkoxysilane and (b) at least one selected from the group consisting of epoxy group-containing silane coupling agent and amino group-containing silane coupling agent on a surface of a polycarbonate resin substrate.

EP 1 038 907 A2

## Description

BACKGROUND OF THE INVENTION

1) Field on the Invention

The present invention relates to a polycarbonate resin laminate according to a one-coat method without using a primer layer, having a cured layer formed of a polyorganosiloxane coating on a surface of a polycarbonate resin substrate, which provides good adhesion of the cured layer to the substrate and excellent abrasion resistance and excellent weather resistance.

2) Prior art

Thermoplastic resin, particularly polycarbonate resin has been used in a wide range as structural material instead of glass since polycarbonate resin has excellent transparency, light weight and provides excellent impact resistance. However, use of polycarbonate resin is limited since its surface characteristics such as abrasion resistance, weather resistance and chemical resistance are inferior. The improvement of surface characteristics of polycarbonate resin substrate has been earnestly required. As a method for improvement of surface characteristics, there is a method for coating a molded article surface of a polycarbonate resin with a surface treatment agent. For example, methods for forming a cured layer composed of a multifunctional acrylic photo-curing resin or a melamine type or organopolysiloxane type thermosetting resin on a surface of a polycarbonate resin substrate have been suggested.

Among them, it is known that organopoly-siloxane is useful since a material coated with an organopolysiloxane resin on a surface of a polycarbonate resin substrate provides excellent abrasion resistance and excellent chemical resistance. However, The coat with such organopolysiloxane resin causes a problem of adhesion to a polycarbonate resin. Particularly, when the above-mentioned material was used outdoors for a long time, there occurred a problem that the coated layer peeled off.

As a method for improvement of adhesion, Japanese Patent Kokai (Laid-open) No. 7-90224 suggests a method comprising incorporating various polymers with good adhesion into a coating, but in the method, surface hardness is sacrificed and weather resistance of the coating is remarkably deteriorated in some cases. Therefore, for use of polycarbonate resin to require surface hardness and weather resistance, a two-coat method for using an acrylic coating as a primer is usually applied, but application of the method prolongs working step and causes a problem in productivity. Thus, development of one-coat method has been earnestly desired.

SUMMARY OF THE INVENTION

An object of the present invention is to solve the above-mentioned prior art problems and provide a polycarbonate resin laminate which provides good adhesion of a cured layer formed on a surface of a polycarbonate resin substrate to the substrate, excellent abrasion resistance and excellent weather resistance according to a one-coat method without using a primer layer.

As a result of extensive studies for solving the above-mentioned prior art problems, the inventors have found that adhesion of a cured layer formed on a surface of a polycarbonate resin substrate to the substrate can be improved according in one coat without using a primer layer by using at least one selected from the group consisting of epoxy group-containing silane coupling agent and amino group-containing silane coupling agent in an organopolysiloxane coating for the cured layer, and furthermore a polycarbonate resin laminate with good adhesion and excellent weather resistance can be obtained in one coat by using a polycarbonate resin substrate having a polycarbonate resin layer containing ultraviolet absorbent provided on the substrate surface, and have accomplished the present invention.

That is, the present invention provides a polycarbonate resin laminate having a cured layer formed of an organopolysiloxane coating obtainable from a blend comprising:

(a) a mixture of bifunctional alkoxysilane represented by the following general formula (1), trifunctional alkoxysilane represented by the following general formula (2) and tetrafunctional alkoxysilane represented by the following general formula (3) or a mixture of said trifunctional alkoxysilane and said tetrafunctional alkoxysilane, and
(b) at least one selected from the group consisting of epoxy group-containing silane coupling agent and amino group-containing silane coupling agent, on a surface of a polycarbonate resin substrate;

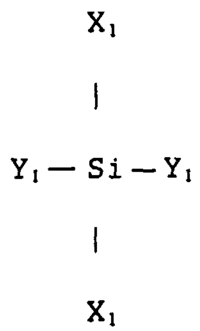

(1)

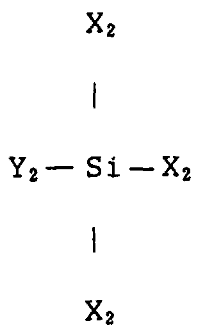

(2)

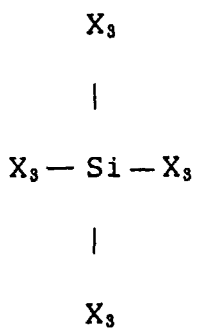

(3)

wherein each $X_1$ , $X_2$ and $X_3$ is an alkoxyl group; and each $Y_1$ and $Y_2$ is an alkyl group or an aryl group.

The present invention provides also a polycarbonate resin laminate having a cured layer formed of an organopolysiloxane coating obtainable from a blend comprising:

(a) a mixture of the bifunctional alkoxysilane represented by the above-mentioned general formula (1), the trifunctional alkoxysilane represented by the above-mentioned general formula (2) and the tetrafunctional alkoxysilane represented by the above-mentioned general formula (3) or a mixture of said trifunctional alkoxysilane and said tetrafunctional alkoxysilane, and

(b) at least one selected from the group consisting of epoxy group-containing silane coupling agent and amino group-containing silane coupling agent, on a surface of a polycarbonate resin layer containing ultraviolet absorbent provided on a surface of a polycarbonate resin substrate.

DETAILED DESCRIPTION OF THE INVENTION

In the present invention, a cured layer is formed of an organopolysiloxane coating from obtainable from a blend comprising:

(a) a mixture of bifunctional alkoxysilane represented by the following general formula (1), trifunctional alkoxysilane represented by the following general formula (2) and tetrafunctional alkoxysilane represented by the following general formula (3) or a mixture of said trifunctional alkoxysilane and said tetrafunctional alkoxysilane, and
(b) at least one selected from the group consisting of epoxy group-containing silane coupling agent and amino group-containing silane coupling agent, on a surface of a polycarbonate resin substrate or on a surface of a polycarbonate resin layer containing ultraviolet absorbent provided on a surface of a polycarbonate resin substrate;

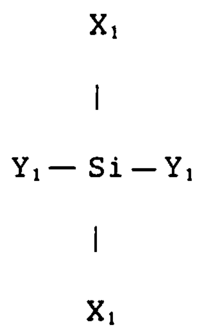

(1)

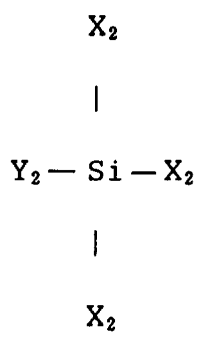

(2)

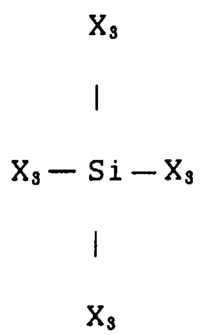

(3)

wherein each $X_1$ , $X_2$ and $X_3$ is an alkoxyl group; and each $Y_1$ and $Y_2$ is an alkyl group or an aryl group.

It is preferable that each $X_1$ and $X_2$ is an alkoxyl group having 1 to 2 carbon atoms; $X_3$ is an alkoxyl group having 1 to 3 carbon atoms; and each $Y_1$ and $Y_2$ is an alkyl group having 1 to 2 carbon atoms or a phenyl group.

That is, the above-mentioned blend is subjected to hydrolysis and partial condensation in a solvent in the presence of an acid catalyst to obtain an organopolysiloxane coating and then the organopolysiloxane coating thus obtained is coated on the above-mentioned surface of the substrate or the polycarbonate resin layer and then cured, thereby obtaining a cured layer on the above-mentioned surface. Thus, the polycarbonate resin laminate of the present invention is produced.

Examples of the bifunctional alkoxysilane include dimethyldimethoxysilane, dimethyldiethoxysilane, diphenyldimethoxysilane and diphenyldiethoxysilane. Examples of the trifunctional alkoxysilane include methyltrimethoxysilane, methyltriethoxysilane, ethyltrimethoxysilane, ethyltriethoxysilane, phenyltrimethoxysilane and phenyltriethoxysilane. Examples of the tetrafunctional alkoxysilane include tetramethoxysilane, tetraethoxysilane and tetrapropoxysilane.

Regarding the mixing ratio of the above-mentioned alkoxysilanes and silane coupling agent, it is preferabel that 0 to 25 % by weight of the bifunctional alkoxysilane, 40 to 80 % by weight of the trifunctional alkoxysilane, 10 to 25 % by weight of the tetrafunctional alkoxysilane and 5 to 10 % by weight of the silane coupling agent and total percentage of bifunctional alkoxysilane, trifunctional alkoxysilane, tetrafunctional alkoxysilane and silane coupling agent is equal to 100 % by weight. When the bifunctional alkoxysilane is added above 25 % by weight or the trifunctional alkoxysilane is added above 80 % by weight, abrasion resistance is deteriorated. When the tetrafunctional alkoxysilane is added above 30 % by weight, adhesion to the substrate becomes poor, whereas below 10 % by weight abrasion resistance is deteriorated.

As the silane coupling agent to be used in the present invention, at least one selected from the group consisting of epoxy group-containing silane coupling agent and amino group-containing silane coupling agent is preferable. The silane coupling agent is used in the range of 5 to 10 % by weight based on 100 % by weight of total percentage of bifunctional alkoxysilane, trifunctional alkoxysilane, tetrafunctional alkoxysilane and silane coupling agent. When the silane coupling agent is added below 5 % by weight, strength of layer and adhesion are deteriorated, whereas above 10 % by weight abrasion resistance is deteriorated.

Examples of epoxy group-containing coupling agent include 3-glycidoxypropylmethyldimethoxysilane, 3-glycidoxypropyltrimethoxysilane and 2-(3,4-epoxycyclohexyl) ethyltrimethoxysilane. Examples of amino group-containing silane coupling agent include N-(2-aminoethyl)-3-aminopropylmethyldimethoxysilane, N-(2-aminoethyl)-3-aminopropyltrimethoxysilane and 3-aminopropyltriethoxysilane.

As described above, the organopolysiloxane coating of the present invention is produced by hydrolysis and partial condensation of the blend of the alkoxysilane and the silane coupling containing low alcohol and/or water as solvent in the presence of an acid catalyst. Examples of the low alcohol include methanol, ethanol, isopropanol and butanol.

The organopolysilane coating as reaction product of hydrolysis and partial condensation may contain vinyl group-containing silane coupling agents such as vinyltrimethoxysilane and vinyltriethoxysilane, methacryloxy group-containing silane coupling agents such as 3-methacryloxypropylmethyldimethoxysilane and 3-methacryloxypropyltrimethoxysilane in the range not to impair its properties.

It is preferable that a curing catalyst containing a butter solution is added to the organopolysiloxane coating so as to be able to obtain a cured layer at a temperature of 120 to 140 °C. Examples of curing catalyst include dimethylamine, ethanolamine acetate, dimethylaniline formate, benzoic acid tetraethylammonium salt, sodium acetate, sodium propionate, sodium formate, benzoylacetic acid trimethylammonium salt and tetramethylammonium acetate. The curing catalyst is used in the range of 0.1 to 1 parts by weight based on 100 parts by weight of non-volatile matter determined according to JIS K5407 in the organopolysiloxane coating.

Further, additives such as lubricant, antistatic agent, ultraviolet absorbent and light stabilizer may be added to the above-mentioned organopolysiloxane coating.

As the polycarbonate resin substrate to coat the heat-curing organopolysiloxane coating, polymers produced from bisphenol compounds including, typically, 2,2-bis (4-hydroxyphenyl) alkane and 2,2-bis (4-hydroxy-3,5-dihalogenophenyl) alkane by a known process are used, and a structural unit(s) derived from fatty acid diol or a structural unit(s) having ester bond may be contained in the polymer skelton. The molecular weight of the polymers is not limited. From the viewpoints of extrusion molding and mechanical strength, a viscosity average molecular weight of 10,000 to 50,000 is preferable and a viscosity average molecular weight of 20,000 to 30,000 is more preferable. The thickness of the substrate is not limited. The thickness is preferably in the range of 0.1 to 20 mm.

If necessary, ultraviolet absorbent, antioxidant, heat stabilizer, fire retardant, antistatic agent, heat ray screening agent, etc., may be added to the polycarbonate resin substrate.

In order to improve further weather resistance of the polycarbonate resin laminate obtainable in the present invention, it is preferable to use a polycarbonate resin substrate provided a polycarbonate resin layer containing 1 to 10 % by weight and preferably 1 to 5 % by weight of ultraviolet absorbent per 100 % by weight of polycarbonate resin on the substrate surface. Examples of ultraviolet absorbent to be used include known benzotriazoles, benzophenones, salicylic acid phenyl esters and triazines, among which triazines to provide excellent absorption effect of wave length to

cause most degradation of polycarbonate resin and less evaporation are preferable.

The method for providing the polycarbonate resin layer containing ultraviolet absorbent on a surface of a polycarbonate resin substrate is not limited. It is preferable to provide the layer according to a co-extrusion method comprising melt extruding ① a polycarbonate resin together with ② a polycarbonate resin containing ultraviolet absorbent at the same time.

In order to obtain a polycarbonate resin laminate provided a cured layer formed of the above-mentioned thermosetting organopolysiloxane coating, known methods such as spraying, immersion, curtain flow and roll coating are suitably applied. The cured layer has a thickness of 1 to 10 μm and preferably 2 to 5 μm. The cured layer can be obtained by heat curing at a temperature of 130 to 140 °C for 60 minutes.

PREFERRED EMBODIMENT OF THE INVENTION

The present invention will be described below in more detail, referring to Examples, which are not intended to limit the present invention. The word "part" in Examples and Comparative Examples means weight basis.

The measurement and evaluation of each property in Examples and Comparative Examples were performed according the following methods.

[Weather resistance test]

Accelerating test was conducted with a carbon arc type sun shine weather meter according to JIS K5400. After 3000 hours (corresponding to ten years of outdoor exposure), both change of yellowness index and adhesion were investigated. The change of yellowness index was shown by Δ YI= (yellowness index after test) - (yellowness index before test) . When change of yellowness index was 7 or below and adhesion was good, in the present invention, it was judged that the test was passed.

[Abrasion resistance test]

Cloud value was measured after 500 revolutions under 500 g load with Taber's abrasion resistance tester loaded with abrasion ring CS-10F according to ASTM 1044. Taber's abrasion resistance (%) was shown by

Δ H%= "(cloud value after test)-(cloud value before test)".

[Adhesion of cured layer]

According to JIS K5400, each eleven cut scale divisions toward length and width were drawn on a sample surface at intervals of 1 mm with a razor's edge to make one hundred square scale divisions. The sample surface having one hundred square scale divisions was sufficiently adhered with an adhesive cellophane tape. Then, when the cellophane tape was drastically peeled off toward this side, the number (X) of square scale division with remained coating film without being peeled off was determined. Adhesion was represented as X/100.

[Heat resistance test]

A sample was placed in an oven at 130 °C for 1 hour and then appearance of the sample and adhesion were investigated. When both appearance and adhesion were good, in the present invention, it was judged that the test was passed.

[Boiling resistance test]

According to JIS K5400, a sample was immersed in hot boiling water for 2 hours and then appearance of the sample and adhesion were investigated. When both appearance and adhesion were good, in the present invention, it was judged that the test was passed.

[Determination of non-volatile matter in organopolysiloxane]

The determination was performed according to JIS K5407.

Example 1

[Preparation of coating]

280 parts of isopropanol and 135 parts of a hydrochloric acid aqueous solution were charged into a flask and the interior of the flask was maintained to a temperature of 0 to 10 °C by ice cooling with stirring and both a mixture of 345 parts of methyltriethoxysilane and 75 parts of tetraethoxysilane as alkoxysilane and a mixture of 12 parts of 3-glycidoxypropyltrimethoxysilane and 12 parts of N-(2-aminoethyl)3-aminopropyl-triethoxysilane as coupling agent were dropwise added thereto at the same time. After adding, the temperature was maintained at 10 °C and stirring was continued for 2 hours and then the temperature was raised to 20 to 25 °C with stirring for 2 hours to perform aging. Then, 1 part of tetramethylammonium acetate as curing catalyst was added thereto and pH was adjusted with acetic acid and then non-volatile matter was adjusted with isopropanol, whereby an organopolysiloxane coating was obtained. pH of the organopolysiloxane coating thus obtained was 5.1 and its viscosity @25°C was 8 cP and its non-volatile matter was 17 %.

[Preparation of polycarbonate resin substrate]

96 parts of a polycarbonate resin, manufactured by Mitsubishi Engineering Plastics k.k., Japan, trade name: IUPILON E-2000F as polycarbonate resin for ultraviolet ray resistance layer containing an ultraviolet absorbent and 4 parts of 2-(4,6-diphenyl-1,3,5-triazinyl)-5-[(hexyl)oxy]-phenol were preliminarly mixed in a tumbler. The polycarbonate resin for ultraviolet ray resistance layer thus obtained was extruded with an extruder, provided with 30 mm single axis. On the other hand, As a material for substrate, a polycarbonate resin, manufactured by Mitsubishi Engineering Plastics k.k., Japan, trade name : IUPILON E-2000U was extruded with an extruder, provided with 65 mm single axis. Both the polycarbonate resin for ultraviolet ray resistance layer and the polycarbonate resin for substrate thus extruded was again co-extruded with a feed block type co-extruding die, whereby a two-layer laminate sheet with two kinds of layer (thickness of laminate : 1.0 mm, thickness of polycarbonate resin layer containing an ultraviolet absorbent : about 50 μm) was obtained.

[Preparation of polycarbonate resin laminate provided with a cured layer]

The organopolysiloxane coating obtained above was coated on the polycarbonate resin layer containing an ultraviolet absorbent in the two-layer laminate sheet obtained above according to a flow coating method so as to form a cured layer with a thickness of 2 to 5 μm and cured at 135 °C for one hour, whereby a polycarbonate resin laminate provided with a cured layer was obtained. The evaluation result of properties of the polycarbonate resin laminate thus obtained was shown in Table 1.

Example 2

The polycarbonate resin laminate provided with a cured layer formed of an organopolysiloxane coating was obtained in the same manner as in Example 1 except that 88 parts of dimethyldimethoxysilane, 242 parts of methyltrimethoxysilane and 88 parts of tetramethoxysilane as alkoxysilane and 22 parts of 3-aminopropyltriethoxysilane as silane coupling agent were used. The evaluation result of properties of the polycarbonate resin thus obtained was shown in Table 1.

Example 3

The polycarbonate resin laminate provided with a cured layer formed of an organopolysiloxane coating was obtained in the same manner as in Example 1 except that 88 parts of dimethyldimethoxysilane, 242 parts of methyltrimethoxysilane and 88 parts of tetramethoxysilane as alkoxysilane and 22 parts of 3-glycidoxypropyltrimethoxysilane as coupling agent were used. The evaluation result of properties of the polycarbonate resin thus obtained was shown in Table 1.

Example 4

The polycarbonate resin laminate provided with a cured layer formed of an organopolysiloxane coating was obtained in the same manner as in Example 1 except that 88 parts of dimethyldimethoxysilane, 242 parts of methyltrimethoxysilane and 88 parts of tetramethoxysilane as alkoxysilane and 11 parts of 3-glycidoxypropyltrimethoxysilane and 11 parts of 3-aminopropyltriethoxysilane as coupling agent were used. The evaluation result of properties of the

polycarbonate resin thus obtained was shown in Table 1.

Example 5

The polycarbonate resin laminate provided with a cured layer formed of an organopolysiloxane coating was obtained in the same manner as in Example 1 except that 110 parts of dimethyldimethoxysilane, 198 parts of methyltrimethoxysilane and 110 parts of tetramethoxysilane as alkoxysilane and 11 parts of 3-glycidoxypropyltrimethoxysilane and 11 parts of 3-aminopropyltriethoxysilane as coupling agent were used. The evaluation result of properties of the polycarbonate resin thus obtained was shown in Table 1.

Comparative Example 1

The polycarbonate resin laminate provided with a cured layer formed of an organopolysiloxane coating was obtained in the same manner as in Example 1 except that no silane coupling agent was used. The evaluation result of properties of the polycarbonate resin thus obtained was shown in Table 2.

Comparative Example 2

The polycarbonate resin laminate provided with a cured layer formed of an organopolysiloxane coating was obtained in the same manner as in Example 1 except that 242 parts of methyltrimethoxysilane and 176 parts of tetramethoxysilane as alkoxysilane and 11 parts of 3-glycidoxypropyltrimethoxysilane and 11 parts of 3-aminopropyltriethoxysilane as silane coupling agent were used. The evaluation result of properties of the polycarbonate resin thus obtained was shown in Table 2.

Comparative Example 3

The polycarbonate resin laminate provided with a cured layer formed of an organopolysiloxane coating was obtained in the same manner as in Example 1 except that 88 parts of dimethyldimethoxysilane, 242 parts of methyltrimethoxysilane and 88 parts of tetramethylsilane as alkoxysilane and 22 parts of vinyltrimethoxysilane as silane coupling agent were used. The evaluation result of properties of the polycarbonate resin thus obtained was shown in Table 2.

Example 6

The polycarbonate resin laminate provided with a cured layer formed of an organopolysiloxane coating was obtained in the same manner as in Example 1 except that 96 parts of a polycarbonate resin, manufactured by Mitsubishi Engineering Plastics k.k., Japan, trade name : IUPILON E-2000F as polycarbonate resin substrate and 4 parts of 2-(4,6-diphenyl-1,3,5-triazin-2-yl)-5-[(hexyl)oxy]-phenol as ultraviolet absorbent were preliminary mixed in a tumbler. The polycarbonate resin containing an ultraviolet absorbent thus obtained was extruded with an extruder provided with 65 mm single axis, whereby a sheet of thickness 1.0 mm was obtained and the sheet was used as substrate. The evaluation result of properties of the polycarbonate resin thus obtained was shown in Table 1.

According to the present invention, a polycarbonate resin laminate provided with a cured layer formed of an organopolysiloxane coating on a surface of polycarbonate resin substrate which provides good adhesion of the cured layer to the substrate and excellent abrasion resistance, weather resistance and chemical resistance, and has a merit in cost and is useful as structural material instead of glass can be obtained according to a one-coat method without using a primer layer.

Table 1

| Test item | Example 1 | Example 2 | Example 3 | Example 4 | Example 5 | Example 6 |
|---|---|---|---|---|---|---|
| Appearance of cured layer | | | | | | |
| Initial | good | good | good | good | good | good |
| After heat resistance test | good | good | good | good | good | good |
| After boiling resistance test | good | good | good | good | good | good |
| Adhesion of cured layer | | | | | | |
| Initial | 100/100 | 100/100 | 100/100 | 100/100 | 100/100 | 100/100 |
| After heat resistance test | 100/100 | 100/100 | 100/100 | 100/100 | 100/100 | 100/100 |
| After boiling resistance test | 100/100 | 100/100 | 100/100 | 100/100 | 100/100 | 100/100 |
| Δ H% in abrasion resistance test | 1~2 | 1~2 | 1~2 | 1~2 | 1~2 | 1~2 |
| Δ YI in weather resistance test | 1~2 | 1~2 | 1~2 | 1~2 | 1~2 | 1~2 |

Table 2

| Test item | Comp.Ex.1 | Comp.Ex. 2 | Comp.Ex.3 |
|---|---|---|---|
| Appearance of cured layer | | | |
| Initial | good | Crack | good |
| After heat resistance test | Crack | Crack | good |
| After boiling resistance test | Peeling off | Peeling off | Peeling off |
| Adhesion of cured layer | | | |
| Initial | 0/100 | 50/100 | 0/100 |
| After heat resistance test | 0/100 | 0/100 | 0/100 |
| After boiling resistance test | - | - | - |
| Δ H% in abrasion resistance test | 1~2 | - | 3~4 |
| Δ YI in weather resistance test | - | - | - |

**Claims**

**1.** A polycarbonate resin laminate having a cured layer formed of an organopolysiloxane coating obtainable from a blend comprising:

(a) a mixture of bifunctional alkoxysilane represented by the following general formula (1), trifunctional alkoxysilane represented by the following general formula (2) and tetrafunctional alkoxysilane represented by the following general formula (3) or a mixture of said trifunctional alkoxysilane and said tetrafunctional alkoxysilane, and
(b) at least one selected from the group consisting of epoxy group-containing silane coupling agent and amino group-containing silane coupling agent, on a surface of a polycarbonate resin substrate;

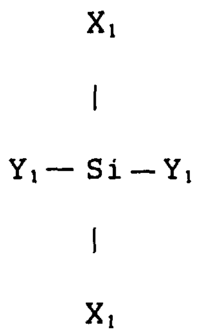

(1)

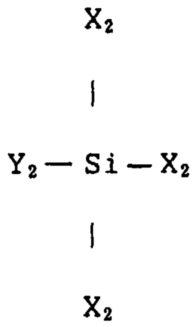

(2)

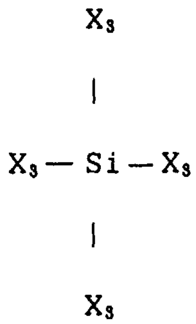

(3)

wherein each $X_1$, $X_2$ and $X_3$ is an alkoxyl group; and each $Y_1$ and $Y_2$ is an alkyl group or an aryl group.

**2.** A polycarbonate resin laminate according to claim 1, wherein each $X_1$ and $X_2$ is an alkoxyl group having 1 to 2 carbon atoms; $X_3$ is an alkoxyl group having 1 to 3 carbon atoms ; and each $Y_1$ and $Y_2$ is an alkyl group having 1 to 2 carbon atoms or a phenyl group.

**3.** A polycarbonate resin laminate according to claim 1, wherein said epoxy group-containing silane coupling agent is 3-glycidoxypropylmethyldimethoxysilane, 3-glycidoxypropyltrimethoxysilane or 2-(3,4-epoxycyclohexyl)ethyltrimethoxysilane.

**4.** A polycarbonate resin laminate process according to claim 1, wherein said amino group-containing silane coupling agent is N-(2-aminoethyl)-3-aminopropylmethyldimethoxysilane, N-(2-aminoethyl)-3-aminopropyltrimethoxysilane or 3-aminopropyltriethoxysilane.

**5.** A polycarbonate resin laminate according to claim 1, wherein said blend comprises (a) 0 to 25 % by weight of said bifunctional alkoxysilane, 40 to 80 % by weight of said trifunctional alkoxysilane and 10 to 25 % by weight of said tetrafunctional alkoxysilane and (b) 5 to 10 % by weight of said silane coupling agent and total percentage of bifunctional alkoxysilane, trifunctional alkoxysilane, tetrafunctional alkoxysilane and silane coupling agent is equal to 100 % by weight.

**6.** A polycarbonate resin laminate according to claim 1, wherein said organopolysiloxane coating further comprises a curing catalyst.

**7.** A polycarbonate resin laminate according to claim 6, wherein said curing catalyst is dimethylamine, ethanolamine acetate, dimethylaniline formate, benzoic acid tetraethylammonium salt, sodium acetate, sodium propionate, sodium formate, benzoylacetic acid trimethylammonium salt or tetramethylammonium acetate.

**8.** A polycarbonate resin laminate according to claim 1, wherein said cured layer is a layer formed by heat curing of said organopolysiloxane coating.

**9.** A polycarbonate resin laminate according to claim 8, wherein said cured layer is a layer formed by heat curing at a temperature of 130 to 140 °C for 60 minutes.

**10.** A polycarbonate resin laminate according to claim 1, wherein said cured layer has a thickness of 1 to 10 μm.

**11.** A polycarbonate resin laminate having a cured layer formed of an organopolysiloxane coating obtainable from a blend comprising:

(a) a mixture of bifunctional alkoxysilane represented by the following general formula (1), trifunctional alkoxysilane represented by the following general formula (2) and tetrafunctional alkoxysilane represented by the following general formula (3) or a mixture of said trifunctional alkoxysilane and said tetrafunctional alkoxysilane, and
(b) at least one selected from the group consisting of epoxy group-containing silane coupling agent and amino group-containing silane coupling agent, on a surface of a polycarbonate resin layer containing ultraviolet absorbent provided on a surface of a polycarbonate resin substrate;

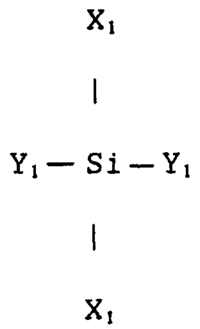

(1)

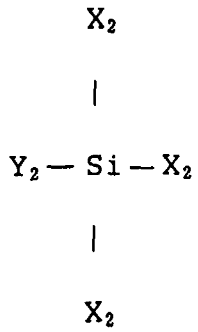

(2)

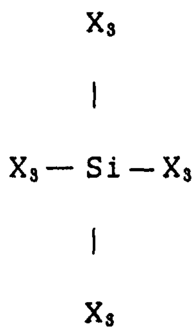

(3)

wherein each $X_1$ , $X_2$ and $X_3$ is an alkoxyl group; and each $Y_1$ and $Y_2$ is an alkyl group or an aryl group.

**12.** A polycarbonate resin laminate according to claim 11, wherein each $X_1$ and $X_2$ is an alkoxyl group having 1 to 2 carbon atoms; $X_3$ is an alkoxyl group having 1 to 3 carbon atoms ; and each $Y_1$ and $Y_2$ is an alkyl group having 1 to 2 carbon atoms or a phenyl group.

**13.** A polycarbonate resin laminate according to claim 11, wherein said epoxy group-containing silane coupling agent is 3-glycidoxypropylmethyldimethoxysilane, 3-glycidoxypropyltrimethoxysilane or 2-(3,4-epoxycyclohexyl)ethyltrimethoxysilane.

**14.** A polycarbonate resin laminate process according to claim 11, wherein said amino group-containing silane coupling agent is N-(2-aminoethyl)-3-aminopropylmethyldimethoxysilane, N-(2-aminoethyl)-3-aminopropyltrimethoxysilane or 3-aminopropyltriethoxysilane.

**15.** A polycarbonate resin laminate according to claim 11, wherein said blend comprises (a) 0 to 25 % by weight of said bifunctional alkoxysilane, 40 to 80 % by weight of said trifunctional alkoxysilane and 10 to 25 % by weight of said tetrafunctional alkoxysilane and (b) 5 to 10 % by weight of said silane coupling agent and total percentage of bifunctional alkoxysilane, trifunctional alkoxysilane, tetrafunctional alkoxysilane and silane coupling agent is equal to 100 % by weight.